# EUROPÄISCHE PATENTANMELDUNG

(11) **EP 2 687 785 A1**
(43) Veröffentlichungstag der Anmeldung: **22.01.2014**
(21) Anmeldenummer: 13176013.4
(22) Anmeldetag: 11.07.2013
(51) Int. Cl.: F24C 7/08, C03C 17/00, F24C 15/10, H05B 6/12

(54) **Verfahren zu einer Herstellung einer Bedienvorrichtung und Bedienvorrichtung**

(30) Priorität: 20.07.2012 ES 201231160
(71) Anmelder: BSH Bosch und Siemens Hausgeräte GmbH, 81739 München (DE)
(72) Erfinder: Alaman Aguilar, Jorge, 50008 Zaragoza (ES); Artal Lahoz, Maria Carmen, 50007 Zaragoza (ES); Boned Olite, Cecilia, 50007 Zaragoza (ES); Bunuel Magdalena, Miguel Angel, 50017 Zaragoza (ES); Ester Sola, Francisco Javier, 50001 Zaragoza (ES); Martinez Solanas, Elena, 50015 Zaragoza (ES); Planas Layunta, Fernando, 50009 Zaragoza (ES)

(57) **Zusammenfassung**

Die Erfindung geht aus von einem Verfahren zu einer Herstellung einer Bedienvorrichtung (10a-c) mit wenigstens einem Bedienelement (12a-c).

Um eine gattungsgemäße Vorrichtung mit verbesserten Eigenschaften hinsichtlich einer Reinigung und eines Bedienkomforts bereitzustellen, wird vorgeschlagen, dass das Bedienelement (12a-c) aus einem Rohelement (14a-c) durch eine gezielte Veränderung wenigstens eines Parameters zumindest eines Umgebungsbereichs (16a-c) einer Oberfläche (18a-c) des Rohelements (14a-c) hergestellt wird, um wenigstens eine Sichtbarkeit einer Verschmutzung der Oberfläche (18a-c) zumindest wesentlich zu reduzieren.

## Beschreibung

Die Erfindung geht aus von einem Verfahren nach dem Oberbegriff des Anspruchs 1.

Es wurde bereits ein Verfahren zu einer Herstellung einer Bedienvorrichtung mit wenigstens einem Bedienelement vorgeschlagen.

Die Aufgabe der Erfindung besteht insbesondere darin, eine gattungsgemäße Vorrichtung mit verbesserten Eigenschaften hinsichtlich einer Reinigung und eines Bedienkomforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Verfahren zu einer Herstellung einer Bedienvorrichtung mit wenigstens einem Bedienelement. Beispielsweise kann das Bedienelement einen mechanischen Schaltknebel, vorzugsweise einen Drehknebel, umfassen

Es wird vorgeschlagen, dass das Bedienelement aus einem Rohelement durch eine gezielte Veränderung wenigstens eines Parameters zumindest eines Umgebungsbereichs einer Oberfläche des Rohelements hergestellt wird, um wenigstens eine Sichtbarkeit einer Verschmutzung der Oberfläche zumindest wesentlich zu reduzieren. Unter einem "Rohelement" soll insbesondere ein Element verstanden werden, das zumindest teilweise und vorzugsweise wenigstens zu einem Großteil, insbesondere mit einem Massenanteil von mehr als 70 %, vorzugsweise von mehr als 80 % und insbesondere von mehr als 90 %, aus einer Glaskeramik und/oder einem Glas ausgebildet ist. Unter einem "Umgebungsbereich einer Oberfläche des Rohelements" soll insbesondere ein Bereich des Rohelements verstanden werden, der bei Betrachtung in einer zumindest im Wesentlichen senkrecht zu der Oberfläche des Rohelements ausgerichteten Normalenrichtung an die Oberfläche des Rohelements angrenzt. Insbesondere weist der Umgebungsbereich in der Normalenrichtung eine Erstreckung mit einem Betrag auf, der weniger als 50 %, vorzugsweise weniger als 35 % und insbesondere weniger als 20 % eines Betrags einer Erstreckung des Rohelements in der Normalenrichtung beträgt. Unter der Wendung einer "zumindest im Wesentlichen" senkrecht zu der Oberfläche des Rohelements ausgerichteten Normalenrichtung soll insbesondere verstanden werden, dass die Normalenrichtung mit der Oberfläche des Rohelements einen Winkel einschließt, der um weniger als 5°, vorzugsweise um weniger als 3° und insbesondere um weniger als 1° von einem Winkel von 90° abweicht. Unter einer "Sichtbarkeit" einer Verschmutzung einer Oberfläche soll insbesondere verstanden werden, dass die Verschmutzung der Oberfläche für eine Person, insbesondere für einen Bediener der Kochfeldvorrichtung, bei einer Betrachtung in einer zumindest im Wesentlichen senkrecht zu der Oberfläche ausgerichteten Richtung sowie bei einer konstanten Raumbeleuchtung von 300 bis 800 lx bis zu einem entlang der zumindest im Wesentlichen senkrecht zu der Oberfläche ausgerichteten Richtung verlaufenden Abstand eines Auges der Person von der Oberfläche von 1 m mit bloßem Auge optisch wahrnehmbar ist. Insbesondere soll unter der Sichtbarkeit der Verschmutzung verstanden werden, dass die Verschmutzung unter einer Vermeidung technischer Hilfsmittel zu einer Erhöhung einer Sichtbarkeit, wie beispielsweise eines Mikroskops, einer Lupe, einer Spektroskopie oder jedes anderen, einem Fachmann als sinnvoll erscheinenden Hilfsmittels zu einer Erhöhung einer Sichtbarkeit, für die Person optisch wahrnehmbar und insbesondere sichtbar ist. Unter einer "Verschmutzung" der Oberfläche soll insbesondere eine Verschmutzung verstanden werden, die durch Fett, Öl, Wasser, insbesondere durch Kochwasser, und/oder Fingerabdrücke einer Person, insbesondere des Bedieners der Kochfeldvorrichtung, ausgebildet ist. Die Fingerabdrücke der Person sind vorzugsweise als eine Kombination von Wasser mit Fett und/oder Öl ausgebildet. Unter der Wendung, wenigstens eine Sichtbarkeit einer Verschmutzung der Oberfläche im Vergleich zum Oberflächenteilbereich "zumindest wesentlich zu reduzieren", soll insbesondere verstanden werden, dass ein entlang einer zumindest im Wesentlichen senkrecht zu der Oberfläche ausgerichteten Richtung verlaufender Abstand, bis zu welchem die Verschmutzung der Oberfläche bei einer Betrachtung in der zumindest im Wesentlichen senkrecht zu der Oberfläche ausgerichteten Richtung sowie bei einer konstanten Raumbeleuchtung von 300 bis 800 lx für eine Person mit bloßem Auge sichtbar ist, um mehr als 5 %, vorzugsweise um mehr als 10 % und insbesondere um mehr als 20 % reduziert wird. Unter "vorgesehen" soll insbesondere speziell ausgelegt und/oder ausgestattet verstanden werden. Durch eine erfindungsgemäße Ausgestaltung kann vorteilhaft eine Sichtbarkeit einer Verschmutzung der Oberfläche reduziert werden, wodurch ein Bediener weniger Zeit in eine Reinigung der Oberfläche aufzuwenden hat. Dadurch kann eine Reinigungsfrequenz reduziert und somit ein Bedienkomfort sowie eine Reinigung verbessert werden. Zudem kann durch die reduzierte Reinigungsfrequenz eine Verwendung von Reinigungsprodukten reduziert und dadurch die Umwelt geschont sowie Geld gespart werden. Ferner kann die Bedienvorrichtung frei von einer Sichtbarkeit einer Verschmutzung gehalten werden, wodurch eine ständige Reinigung sowie ein verwischtes Aussehen vermieden werden kann. Zudem kann eine eventuell vorhandene Transparenz von Kontrollleuchten der Bedienvorrichtung erhalten werden.

Ferner wird vorgeschlagen, dass eine Oberflächenrauigkeit des Umgebungsbereichs verändert wird. Unter einer "Oberflächenrauigkeit" des Umgebungsbereichs soll insbesondere verstanden werden, dass der Umgebungsbereich eine Oberfläche mit einer unebenen Oberflächenhöhe aufweist, wobei die Oberfläche Hebungen sowie Senkungen aufweist. Insbesondere soll unter der Oberflächenrauigkeit des Umgebungsbereichs verstanden werden, dass ein Betrag einer Differenz einer maximalen Hebung und einer maximalen Senkung um mehr als 10 %, vorzugsweise um mehr als 15 % und insbesondere um mehr als 20 % größer ist als ein Betrag einer Differenz einer maximalen Hebung und einer maximalen Senkung in einem unbehandelten Zustand des Umgebungsbereichs der Oberfläche, insbesondere vor der erfindungsgemäßen Veränderung der Oberflächenrauigkeit des Umgebungsbereichs. Durch eine erfindungsgemäße Ausgestaltung kann vorteilhaft eine Sichtbarkeit einer Verschmutzung der Oberfläche reduziert werden, wodurch ein Bediener weniger Zeit in eine Reinigung der Oberfläche aufzuwenden hat.

Zudem wird vorgeschlagen, dass eine Porosität des Umgebungsbereichs verändert wird. Unter einer "Porosität" des Umgebungsbereichs soll insbesondere verstanden werden, dass ein durch den Umgebungsbereich aus einem festen Material ausgebildeter Raum eine Vielzahl von Hohlräumen aufweist, die mit fluiden und/oder gasförmigen Materialien ausgefüllt sind. Die Hohlräume können miteinander verbunden sein und/oder isoliert vorliegen und/oder unterschiedliche Geometrien aufweisen. Beispielsweise können die Hohlräume als Risse, Spalten und/oder Poren ausgebildet sein. Beispielsweise können die fluiden Materialien als Wasser, Säfte, Alkoholika und/oder Softdrinks ausgebildet sein. Insbesondere ist das fluide Material als Kochflüssigkeit ausgebildet. Beispielsweise können die gasförmigen Materialien als Stickstoff, Sauerstoff und/oder Wasserdampf ausgebildet sein. Insbesondere ist das gasförmige Material als Luft ausgebildet Durch eine erfindungsgemäße Ausgestaltung kann vorteilhaft eine Sichtbarkeit einer Verschmutzung der Oberfläche reduziert werden, wodurch ein Bediener weniger Zeit für eine Reinigung der Oberfläche aufzuwenden hat.

Weiterhin wird vorgeschlagen, dass der Umgebungsbereich einer Laserbehandlung ausgesetzt wird. Beispielsweise kann die Laserbehandlung des Umgebungsbereichs durch einen künstlich erzeugten Lichtstrahl erfolgen. Alternativ oder zusätzlich ist denkbar, dass die Laserbehandlung des Umgebungsbereichs durch einen künstlich erzeugten Elektronenstrahl erfolgt. Durch eine erfindungsgemäße Ausgestaltung kann vorteilhaft eine gezielte, exakte Veränderung eines Parameters des Umgebungsbereichs der Oberfläche des Rohelements erreicht und dadurch eine Reinigung und ein Bedienkomfort der Bedienvorrichtung verbessert werden.

Ferner wird vorgeschlagen, dass der Umgebungsbereich einer Säurebehandlung ausgesetzt wird. Unter einer "Säurebehandlung" soll insbesondere eine Verwendung einer Säure zu einer Behandlung des Umgebungsbereichs der Oberfläche des Rohelements verstanden werden. Insbesondere soll unter einer Säurebehandlung eine Ätzung verstanden werden. Beispielsweise kann die Säure als Flusssäure oder als Salpetersäure ausgebildet sein. Grundsätzlich ist jedoch denkbar, dass die Säure als jede andere, einem Fachmann als sinnvoll erscheinende Säure ausgebildet ist. Durch eine erfindungsgemäße Ausgestaltung kann vorteilhaft ein Parameter des Umgebungsbereichs der Oberfläche des Rohelements verändert und dadurch eine Reinigung und ein Bedienkomfort der Bedienvorrichtung verbessert werden.

Zudem wird vorgeschlagen, dass der Umgebungsbereich einer mechanischen Abrasion ausgesetzt wird. Unter einer "mechanischen Abrasion" soll insbesondere eine Verwendung eines rauen, harten Materials zu einer Behandlung des Umgebungsbereichs der Oberfläche des Rohelements verstanden werden. Insbesondere kann die mechanische Abrasion durch Schleifen, Polieren erreicht werden. Grundsätzlich ist jedoch denkbar, dass die mechanische Abrasion durch jedes andere, einem Fachmann als sinnvoll erscheinende Verfahren zu einer Erzeugung einer mechanischen Abrasion erreicht werden kann. Durch eine erfindungsgemäße Ausgestaltung kann vorteilhaft ein Parameter des Umgebungsbereichs der Oberfläche des Rohelements verändert und dadurch eine Reinigung und ein Bedienkomfort der Bedienvorrichtung verbessert werden.

In einer weiteren Ausgestaltung der Erfindung wird eine Bedienvorrichtung, insbesondere Kochfeldbedienvorrichtung, welche durch ein erfindungsgemäßes Verfahren hergestellt ist, vorgeschlagen. Durch eine erfindungsgemäße Ausgestaltung kann vorteilhaft eine Bedienvorrichtung ordnungsgemäß, sicher und reproduzierbar hergestellt werden. Zudem kann eine Bedienvorrichtung mit verbesserten Eigenschaften hinsichtlich einer Reinigung und eines Bedienkomforts erreicht werden.

Ferner wird vorgeschlagen, dass das Bedienelement als eine berührungsempfindliche Oberfläche ausgebildet ist. Beispielsweise kann die berührungsempfindliche Oberfläche als eine Touch-Control-Oberfläche und/oder als ein Touch-Screen ausgebildet sein. Durch eine erfindungsgemäße Ausgestaltung kann vorteilhaft eine einfache Bedienung der Bedienvorrichtung erreicht und damit der Bedienkomfort erhöht werden.

Zudem wird vorgeschlagen, dass das Bedienelement als Teil einer Kochfeldplatte ausgebildet ist. Durch eine erfindungsgemäße Ausgestaltung können vorteilhaft Platz eingespart und Baukosten reduziert werden.

In einer weiteren Ausgestaltung der Erfindung wird ein Hausgerät, insbesondere ein Kochfeld, mit einer erfindungsgemäßen Bedienvorrichtung vorgeschlagen. Durch eine erfindungsgemäße Ausgestaltung kann vorteilhaft ein Hausgerät mit einer erfindungsgemäßen Bedienvorrichtung ausgestattet werden, wodurch das Hausgerät vorteilhafte Eigenschaften hinsichtlich einer Reinigung und eines Bedienkomforts aufweist.

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Hausgerät mit einer erfindungsgemäßen Bedienvorrichtung in einer Draufsicht,
- Fig. 2: das erfindungsgemäße Hausgerät mit der erfindungsgemäßen Bedienvorrichtung aus Fig. 1 in einer Schnittdarstellung,
- Fig. 3: eine alternative Ausgestaltung eines erfindungsgemäßen Hausgeräts mit einer erfindungsgemäßen Bedienvorrichtung in einer Draufsicht,
- Fig. 4a: eine weitere alternative Ausgestaltung eines erfindungsgemäßen Hausgeräts mit einer erfindungsgemäßen Bedienvorrichtung in einer Draufsicht und
- Fig. 4b: das erfindungsgemäße Hausgerät mit der erfindungsgemäßen Bedienvorrichtung aus Fig. 4a in einer Seitenansicht.

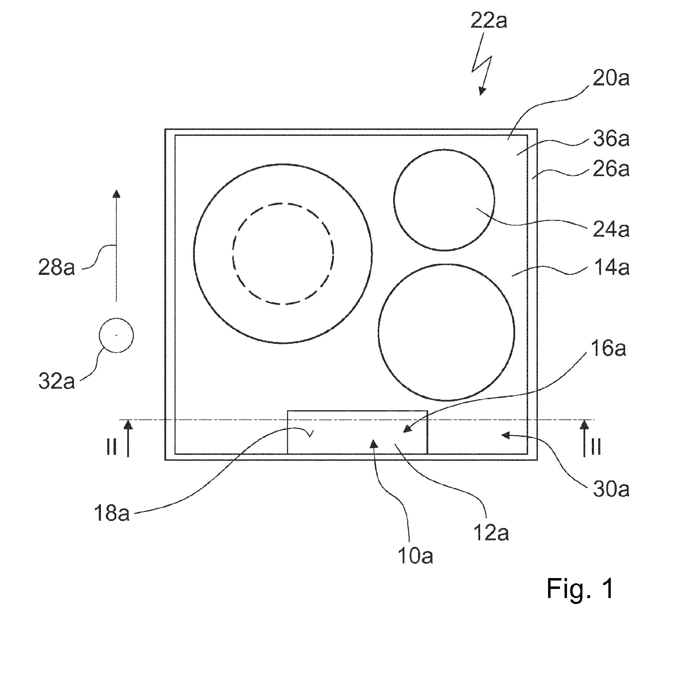

Fig. 1 zeigt ein erfindungsgemäßes Hausgerät 22a, insbesondere ein Kochfeld, mit einer erfindungsgemäßen Bedienvorrichtung 10a. Das Hausgerät 22a ist als Kochfeld ausgebildet und weist eine Kochfeldplatte 20a auf. Die Kochfeldplatte 20a weist einen als Kochfeld ausgebildeten restlichen Oberflächenbereich 36a sowie die Bedienvorrichtung 10a auf. Zudem weist das Hausgerät 22a drei Heizzonen 24a unterschiedlicher Größe auf, wovon lediglich eine mit Bezugszeichen versehen ist. Die Heizzonen 42a sind rund ausgebildet und über die Kochfläche der Kochfeldplatte 20a des Hausgeräts 22a verteilt angeordnet. Das Hausgerät 22a weist einen Kochfeldrahmen 26a auf, der die Kochfeldplatte 20a gänzlich umschließt. Die Bedienvorrichtung 10a des Hausgeräts 22a weist ein Bedienelement 12a auf. Das Bedienelement 12a ist als Teil der Kochfeldplatte 20a ausgebildet. Das Bedienelement 12a ist bezüglich einer Längsrichtung 28a in einem unteren Bereich 30a des Hausgeräts 22a mittig angeordnet. In einem Betriebszustand des Hausgeräts 22a ist das Bedienelement 12a an dem einem Bediener zugewandten unteren Bereich 30a des Hausgeräts 22a angeordnet. Das Bedienelement 12a ist als eine berührungsempfindliche Oberfläche 18a ausgebildet. Die berührungsempfindliche Oberfläche 18a ist als eine Touch-Control-Oberfläche ausgebildet. Alternativ ist denkbar, dass das Bedienelement 12a als ein mechanischer Schaltknebel ausgebildet ist.

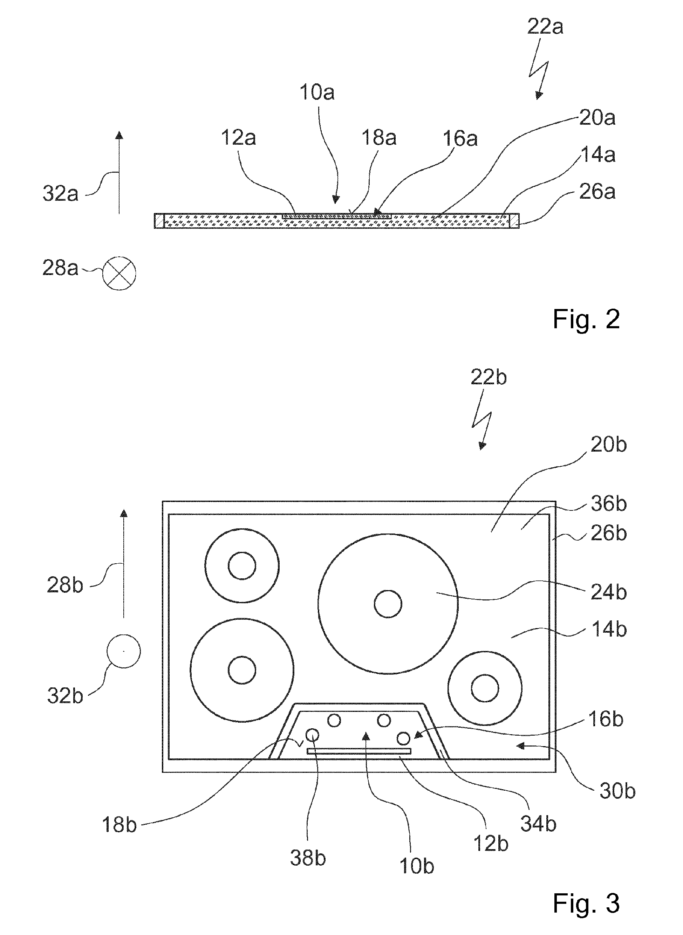

Fig. 1 zeigt des Weiteren die Bedienvorrichtung 10a, insbesondere Kochfeldbedienvorrichtung, welche nach einem erfindungsgemäßen Verfahren hergestellt ist. Das erfindungsgemäße Verfahren zu einer Herstellung der Bedienvorrichtung 10a mit dem Bedienelement 12a soll anhand von Fig. 2 erläutert werden. Das Bedienelement 12a wird aus einem Rohelement 14a durch eine gezielte Veränderung wenigstens eines Parameters eines Umgebungsbereichs 16a der Oberfläche 18a des Rohelements 14a hergestellt, um eine Sichtbarkeit einer Verschmutzung der Oberfläche 18a zu reduzieren. Der Umgebungsbereich 16a der Oberfläche 18a ist bezüglich einer senkrecht zu der Oberfläche 18a des Rohelements 14a ausgerichteten Normalenrichtung 32a unterhalb der Oberfläche 18a des Rohelements 14a angeordnet. Ferner ist der Umgebungsbereich 16a der Oberfläche 18a ein Teilbereich des Rohelements 14a. Die gezielte Veränderung des Parameters des Umgebungsbereichs 16a der Oberfläche 18a des Rohelements 14a wird dadurch erreicht, dass der Umgebungsbereich 16a einer Laserbehandlung ausgesetzt wird. Durch die Laserbehandlung wird eine Porosität des Umgebungsbereichs 16a verändert. Ebenfalls ist denkbar, dass zusätzlich oder alternativ zu der Laserbehandlung der Umgebungsbereich 16a zu einer Veränderung der Porosität einer Säurebehandlung ausgesetzt wird.

Alternativ oder zusätzlich zu einer Veränderung der Porosität des Umgebungsbereichs 16a ist denkbar, dass eine Oberflächenrauigkeit des Umgebungsbereichs 16a verändert wird. Die gezielte Veränderung der Oberflächenrauigkeit des Umgebungsbereichs 16a wird dadurch erreicht, dass der Umgebungsbereich 16a einer mechanischen Abrasion ausgesetzt wird. Die mechanische Abrasion kann durch Schleifen und/oder Polieren der Oberfläche 18a erreicht werden. Als weitere zusätzliche oder alternative Möglichkeit zu einer gezielten Veränderung der Oberflächenrauigkeit des Umgebungsbereichs 16a ist denkbar, dass auf die Oberfläche 18a eine dünne Schicht aufgedampft wird, die die Eigenschaft aufweist, eine Oberflächenrauigkeit zu erzeugen. Beispielsweise kann die die Oberflächenrauigkeit erzeugende Schicht Anteile an Tetraethylorthosilicat und/oder Hexamethyldisiloxan (HMDSO) aufweisen.

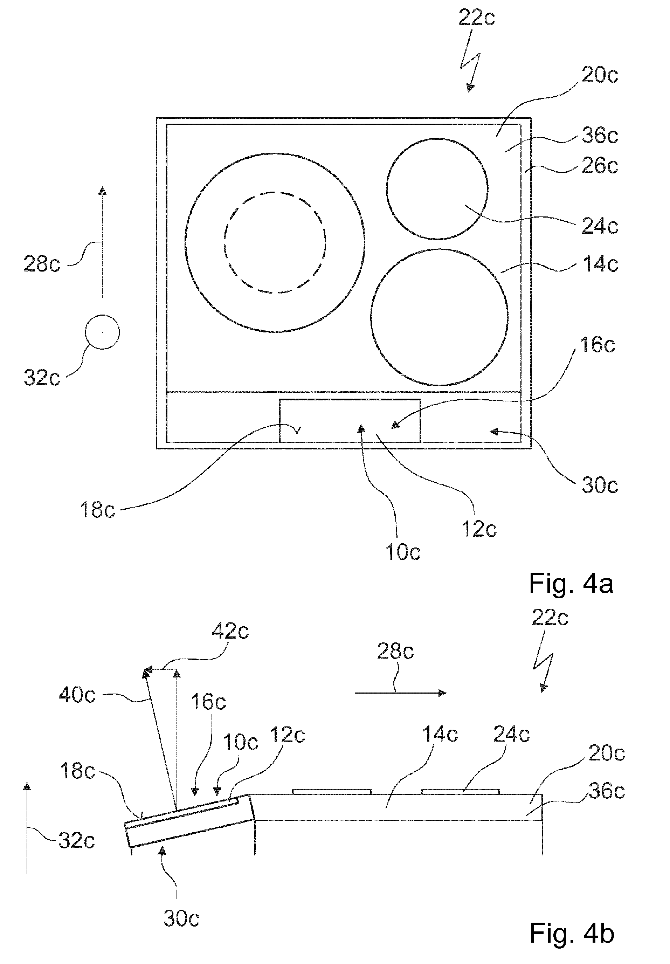

In den Fig. 3 und 4 sind weitere Ausführungsbeispiele der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Fig. 1 und 2, verwiesen werden kann. Zur Unterscheidung der Ausführungsbeispiele ist der Buchstabe a den Bezugszeichen des Ausführungsbeispiels in den Fig. 1 bis 2 nachgestellt. In den Ausführungsbeispielen der Fig. 3 und 4 ist der Buchstabe a durch die Buchstaben b und c ersetzt.

Fig. 3 zeigt eine alternative Ausgestaltung eines erfindungsgemäßen Hausgeräts 22b mit einer erfindungsgemäßen Bedienvorrichtung 10b in einer Draufsicht. In dem in Fig. 1 und 2 gezeigten Ausführungsbeispiel ist eine physikalische Trennung des als Umgebungsbereich 16a der Oberfläche 18a des Rohelements 14a ausgebildeten Bedienelements 12a und des Rohelements 14a vermieden. Im Gegensatz dazu ist in dem in Fig. 3 gezeigten Ausführungsbeispiel ein gezielt veränderter Umgebungsbereich 16b einer Oberfläche 18b eines Rohelements 14b durch eine physikalische Trennung 34b getrennt von einem als Kochfeld ausgebildeten restlichen Oberflächenbereich 36b des Rohelements 14b ausgebildet. Somit sind die Bedienvorrichtung 10b, welche den gezielt veränderten Umgebungsbereich 16b der Oberfläche 18b des Rohelements 14b umfasst, und der als Kochfeld ausgebildete Oberflächenbereich 36b getrennt ausgebildet. Im Gegensatz zu dem Ausführungsbeispiel der Fig. 1 und 2 weist ein Bedienelement 12b mehrere mechanische Bedienmittel 38b auf, wovon lediglich eines mit Bezugszeichen versehen ist. Die Bedienmittel 38b sind als Schaltknebel ausgebildet. Alternativ ist jedoch denkbar, dass das Bedienelement 12b als eine Touch-Control-Oberfläche ausgebildet ist. Ein Umgebungsbereich einer Oberfläche der Bedienmittel 38b ist ebenso einer gezielten Veränderung unterzogen worden wie der Umgebungsbereich 16b der Oberfläche 18b des Rohelements 14b. Folglich ist die Bedienvorrichtung 10b im Ganzen der gezielten Veränderung unterzogen. Zudem weist das Hausgerät 22b vier Heizzonen 24b auf, welche rund ausgebildet und über das Kochfeld 36b einer Kochfeldplatte 20b verteilt angeordnet sind.

Fig. 4a zeigt eine weitere alternative Ausgestaltung eines erfindungsgemäßen Hausgeräts 22c mit einer erfindungsgemäßen Bedienvorrichtung 10c in einer Draufsicht. Fig. 4b zeigt das erfindungsgemäße Hausgerät 22c mit der erfindungsgemäßen Bedienvorrichtung 10c aus Fig. 4a in einer Seitenansicht. Das Ausführungsbeispiel der Fig. 4a und 4b unterscheidet sich von dem Ausführungsbeispiel der Fig. 1 und 2 dadurch, dass in dem Ausführungsbeispiel der Fig. 4a und 4b ein unterer Bereich 30c relativ zu einer durch einen Großteil eines Rohelements 14c aufgespannten horizontalen Ebene geneigt ausgebildet ist. Ein Normalenvektor 40c auf einer Oberfläche 18c des Rohelements 14c weist in einer Einbaulage eine horizontale Komponente 42c auf (vgl. Fig. 4b). Ein Umgebungsbereich 16c der Oberfläche 18c des Rohelements 14c ist einer gezielten Veränderung unterzogen worden, wie dies bereits zu dem Ausführungsbeispiel der Fig. 1 und 2 beschrieben worden ist.

### Bezugszeichen

- 10: Bedienvorrichtung
- 12: Bedienelement
- 14: Rohelement
- 16: Umgebungsbereich
- 18: Oberfläche
- 20: Kochfeldplatte
- 22: Hausgerät
- 24: Heizzone
- 26: Kochfeldrahmen
- 28: Längsrichtung
- 30: Unterer Bereich
- 32: Normalenrichtung
- 34: Physikalische Trennung
- 36: Oberflächenbereich
- 38: Bedienmittel
- 40: Normalenvektor
- 42: Horizontale Komponente

## Patentansprüche

1. Verfahren zu einer Herstellung einer Bedienvorrichtung (10a-c) mit wenigstens einem Bedienelement (12a-c), **dadurch gekennzeichnet, dass** das Bedienelement (12a-c) aus einem Rohelement (14a-c) durch eine gezielte Veränderung wenigstens eines Parameters zumindest eines Umgebungsbereichs (16a-c) einer Oberfläche (18a-c) des Rohelements (14a-c) hergestellt wird, um wenigstens eine Sichtbarkeit einer Verschmutzung der Oberfläche (18a-c) zumindest wesentlich zu reduzieren.

2. Verfahren nach Anspruch 1, **dadurch gekennzeichnet, dass** eine Oberflächenrauigkeit des Umgebungsbereichs (16a-c) verändert wird.

3. Verfahren nach Anspruch 1 oder 2, **dadurch gekennzeichnet, dass** eine Porosität des Umgebungsbereichs (16a-c) verändert wird.

4. Verfahren nach einem der vorhergehenden Ansprüche, **dadurch gekennzeichnet, dass** der Umgebungsbereich (16a-c) einer Laserbehandlung ausgesetzt wird.

5. Verfahren nach einem der vorhergehenden Ansprüche, **dadurch gekennzeichnet, dass** der Umgebungsbereich (16a-c) einer Säurebehandlung ausgesetzt wird.

6. Verfahren nach einem der vorhergehenden Ansprüche, **dadurch gekennzeichnet, dass** der Umgebungsbereich (16a-c) einer mechanischen Abrasion ausgesetzt wird.

7. Bedienvorrichtung, insbesondere Kochfeldbedienvorrichtung, welche durch ein Verfahren nach einem der vorhergehenden Ansprüche hergestellt ist.

8. Bedienvorrichtung nach Anspruch 7, **dadurch gekennzeichnet, dass** das Bedienelement (12a-c) als eine berührungsempfindliche Oberfläche (18a-c) ausgebildet ist.

9. Bedienvorrichtung nach Anspruch 7 oder 8, **dadurch gekennzeichnet, dass** das Bedienelement (12a-c) als Teil einer Kochfeldplatte (20a-c) ausgebildet ist.

10. Hausgerät, insbesondere Kochfeld, mit einer Bedienvorrichtung (10a-c) nach einem der Ansprüche 7 bis 9.
